# EUROPEAN PATENT APPLICATION

(11) **EP 2 975 478 A1**
(43) Date of publication of application: **20.01.2016**
(21) Application number: 14177642.7
(22) Date of filing: 18.07.2014
(51) Int. Cl.: G05B 19/418

(54) **Dynamic connection establishment between graphical hardware devices in an automation system**

(71) Applicant: Siemens Aktiengesellschaft, 80333 München (DE)
(72) Inventor: Tiruveedula, Bhaskar Babu, 560029 Bangalore (IN); Ramanathan, Rathinakumar, 560068 Bangalore (IN); Vidyarthi, Amit Kumar, 560100 Bangalore (IN)

(57) **Abstract**

The present invention relates to a method and apparatus for dynamically establishing connections between hardware devices in an automation system. In one embodiment, the method comprises creating a graphical user interface (GUI) instance (606A) of a non-master hardware device of the automation system in a hardware configuration being created. The method also comprises detecting creation of the GUI instance (606A) of the non-master hardware device of the automation system and identifying a connection rule having a highest rank from a set of connection rules. Furthermore, the method comprises determining a GUI instance (602) from different GUI instances (602, 604) of the master hardware devices in the hardware configuration using the identified connection rule. Moreover, the method comprises dynamically generating a connection object (612) in the hardware configuration which connects the GUI instance (606A) of the non-master hardware device and the GUI instance (602) of the master hardware device.

## Description

The present invention relates to the field of automation system, and more particularly relates to dynamic connection establishment between hardware devices in the automation system.

Typically, an automation system, such as automation system deployed in industrial setting, comprises a plurality of hardware devices such as programmable logic controllers (PLCs), sensors, field devices, interface modules, Input/Output (I/O) links, network switches, communication processors, etc. The hardware devices are responsible for overall operation of the industrial setting. To ensure proper functioning of the industrial setting, a hardware configuration is generated and loaded on a main PLC which is responsible for monitoring and controlling functions of other hardware devices in the industrial setting. The hardware configuration is a graphical representation of the hardware devices of the automation system. The hardware configuration may comprise a plurality of master - non-master configurations. Each master - non-master configuration comprises a master hardware device and a non-master hardware device connected to each other. For example, the master hardware device may be a programmable logic controller (PLC) or communication processor (CP) whereas the non-master hardware device may be a slave device such as interface module, iSlave device such as PLC, iDevice, I/O links, network switch and the like.

Hardware configurations are typically created using an engineering system. The engineering system provides an engineering graphical user interface (GUI) editor which facilitates a user to create hardware configurations. In the engineering GUI editor, an industrial automation project is created followed by creation of a rack. Thereafter, GUI instances corresponding to hardware devices are added in the rack from an engineering catalogue and connections are established between the GUI instances to form a desired hardware configuration of the industrial setting. For example, connections established between the GUI instances may include multi-point interface connection, Profibus decentral peripheral connection, ProfiNET connection, Actuator sensor interface connection, Profibus process automation connection, point-to-point connection, etc. Thereafter, parameters are set for each of the GUI instances corresponding to the hardware devices. For example, the user drags and drops required GUI instances from an engineering catalogue and establishes appropriate connections between unused ports of each GUI instance with unused ports of another GUI instance in the rack using the engineering GUI editor. Then, appropriate parameters are set for each of the GUI instances for generating a desired hardware configuration. Finally, the hardware configuration is compiled in a desired format so that the compiled hardware configuration can be downloaded to a main programmable logic controller of the automation system.

Typically, the automation system comprises large number of hardware devices. In such a scenario, manually establishing connections between the large number of hardware devices using the current engineering system becomes tedious and time consuming. This is because user needs to remember master-non-master combination and their physical features such as type of connection supported and nodes while manually establishing connections between the hardware devices.

In light of the foregoing, there is a need for dynamic connection establishment between hardware devices of the automation system.

Therefore, it is object of the present invention to provide an engineering system which enables dynamic establishment of connections between the hardware devices in the automation system during creation of hardware configuration.

The above object of the present invention is achieved by a method of dynamically establishing connections between hardware devices in an automation system such as an industrial automation system deployed in an industrial setting. The method comprises creating a graphical user interface (GUI) instance of a first type of hardware device of the automation system in a hardware configuration being created using an engineering GUI editor. For example, the engineering GUI editor is an application which enables a user to create desired hardware configuration using GUI instances. The hardware configuration is a graphical representation of the hardware devices and their connections in the automation system. The GUI instances are graphical objects representing the hardware devices in the automation system. The user may drag and drop various GUI instances of hardware devices from an engineering catalogue into the engineering GUI editor. For example, the engineering catalogue is a device library which contains GUI instances of all types of hardware devices that may exist in the automation system. Accordingly, the GUI instance of the first type of hardware device is created in the engineering GUI editor window. In an exemplary implementation, the first type of hardware device may comprise a non-master hardware device. For example, the non-master hardware device may be a slave device such as interface module, iSlave device such as PLC, iDevice, I/O links, network switch and the like.

The method further comprises identifying a connection rule from a set of connection rules based on rank information in a rank database. A connection rule is a rule which specifies a basis for selecting a suitable GUI instance of a second type of hardware device, preferably a master hardware device such as a programmable logic controller or a communication controller, for connecting to the GUI instance of the first type of hardware device. Each of the connection rules is assigned a rank preferably based on usage of the connection rules. The rank information is stored in the rank database. The rank facilitates selection of appropriate connection rule from the set of connection rules.

The method comprises determining a GUI instance of a second type of hardware device from different GUI instances of the second type of hardware device in the hardware configuration using the identified connection rule. The hardware configuration may comprise a plurality of GUI instances associated with the second type of hardware device when the GUI instance of the first type of hardware device is created. Each of the GUI instances of the second type of hardware device is different from one another. For example, one GUI instance may support PROFIBUS communication protocol while other GUI instance may support PROFINET communication protocol. Hence, it is important to determine appropriate GUI instance from the GUI instances prior to establishing connection with the GUI instance of the first type of hardware device. According to the present invention, an appropriate GUI instance of second type of hardware device is selected prior to establishing connection with the GUI instance of the first type of hardware device using the identified connection rule.

Furthermore, the method comprises dynamically generating a connection object in the hardware configuration which connects the GUI instance of the first type of hardware device and the GUI instance of the second type of hardware device. The connection object is graphical representation of a physical connection between the first type of hardware device and the second type of hardware device in the automation system. In this manner, the connection is dynamically established between the first type of hardware device and the second type of hardware device in the hardware configuration. Thus, a need to manually create connections between the hardware devices in the hardware configuration using the engineering GUI editor is eliminated. Advantageously, time and effort required to create connections between the hardware devices is significantly reduced. Once the connections are established, the method comprises setting parameter values for each of the first type of hardware device and the second type hardware device and outputting the hardware configuration for the automation system comprising the first type of hardware device and the second type of hardware device and connections between them. Advantageously, the hardware configuration is simplified through dynamically establishing connections between different hardware devices during creation of the hardware configuration. The hardware configuration is then compiled and downloaded on a hardware device such as a main programmable logic controller in the automation system.

Therein, the method further comprises updating connection history stored in a connection history database based on the generated connection object.

Therein, the method also comprises updating the rank information associated with the identified connection rule.

Therein, the method additionally comprises editing the connection object connected between the GUI instance of the first type of hardware device and the GUI instance of the second type of hardware device in the hardware configuration. Thus, the connection object can be deleted or modified if the dynamically generated connection object is not acceptable to a user.

Therein, the GUI instance of the second type of hardware device is determined in one of the following manner.

In one embodiment, in determining the GUI instance of the second type of hardware device based on the set of connection rules, the method comprises determining number of times each of the different GUI instances of the second type of hardware device was previously connected to the GUI instance of the first type of hardware device based on connection history. For example, the connection history comprises information on previously established connections in past and current hardware configurations. The past hardware configurations may be hardware configurations created by same user or different user. Alternatively, the past hardware configurations are hardware configurations created by a group of users for a particular industrial setting. Furthermore, the method comprises determining the GUI instance from the different GUI instances of the second type of hardware device which was previously connected to the GUI instance of the first type of hardware device for highest number of times among the different GUI instances.

In another embodiment, the method comprises determining type of port supported by the first type of hardware device. The method further comprises determining the GUI instance from the different GUI instances of the second type of hardware device which supports the type of port supported by the first type of hardware device.

In yet another embodiment, the method comprises determining the GUI instance from the different GUI instances of the second type of hardware device which is in close proximity to the GUI instance of the first type of hardware device in the hardware configuration.

In further another embodiment, the method comprises determining number of GUI instances of the first type of hardware device currently connected to each of the different GUI instances of the second type of hardware device. Furthermore, the method comprises determining one or more GUI instances from the different GUI instances of the second type of hardware device which currently supports maximum number of GUI instances of the first type of hardware device than the number of connected GUI instances. Moreover, the method comprises determining the GUI instance from the one or more GUI instances of the second type of hardware device which was previously connected to the GUI instance of the first type of hardware device for highest number of times among the one or more GUI instances.

Therein, in dynamically generating the connection object in the hardware configuration, the method comprises determining an unused port in the GUI instance of the first type of hardware device, and determining an unused port in the determined GUI instance of the second type of hardware device. The method further comprises generating the connection object in the hardware configuration in such a manner that the first end of the connection object is connected to the unused port in the GUI instance of the first type of hardware device and the second end of the connection object is connected to the unused port of the GUI instance of the second type of hardware device in the hardware configuration.

The above object of the present invention is also achieved by an apparatus comprising a processor, and a memory coupled to the processor and comprises an engineering system. The engineering system is stored in the memory in the form of machine-readable instructions executable by the processor. The engineering system provides an engineering graphical user interface (GUI) editor to a user for creating hardware configuration. The engineering system is capable of creating a GUI instance of a first type of hardware device of an automation system in the hardware configuration being created. The engineering system is capable of identifying a connection rule from a set of connection rules based on rank information from a rank database upon creation of the GUI instance. The engineering system is further capable of determining a GUI instance of a second type of hardware device of the automation system from different GUI instances of the second type of hardware device in the hardware configuration based on the identified connection rule. Furthermore, the engineering system is capable of dynamically generating a connection object in the hardware configuration which connects the GUI instance of the first type of hardware device and the GUI instance of the second type of hardware device. The connection object represents a physical connection between the hardware device of first type and the hardware device of second type in the automation system.

Additionally, the engineering system is capable of updating connection history stored in a connection history database based on the connection object.

Also, the engineering system is capable of updating the rank information associated with the identified connection rule.

Moreover, the engineering system is capable of editing the connection object connected between the GUI instance of the first type of hardware device and the GUI instance of the second type of hardware device in the hardware configuration.

The apparatus of the present invention can be desktop computer, laptop computer, tablet, a server, smart phone and the like. It is understood that, in case of desktop computer, the engineering system would be resident on the desktop computer itself. In case of server, the engineering system is hosted on the server computer which provides access to the engineering to a plurality of client devices via a network.

The above object of the present invention is also achieved by a system comprising a server provided with an engineering system and a plurality of client devices coupled to the server. The engineering system is capable of creating a GUI instance of a first type of hardware device of an automation system in an engineering GUI editor displayed on the respective client devices. The engineering system is capable of identifying a connection rule from a set of connection rules based on ranking information from a rank database. The engineering system is capable of determining a GUI instance of a second type of hardware device of the automation system from different GUI instances of the second type of hardware device in the engineering GUI editor based on the identified connection rule. Furthermore, the engineering system is capable of dynamically generating a connection object in the engineering GUI editor which connects the GUI instance of the first type of hardware device and the GUI instance of the second type of hardware device. The connection object represents a physical connection between the hardware device of first type and the hardware device of second type in the automation system.

The system of the present invention may be implemented as client-server architecture. Alternatively, the system of the present invention may be implemented in a cloud computing environment.

The above-mentioned and other features of the invention will now be addressed with reference to the accompanying drawings of the present invention. The illustrated embodiments are intended to illustrate, but not limit the invention.

The present invention is further described hereinafter with reference to illustrated embodiments shown in the accompanying drawings, in which:
- FIG 1: is a block diagram illustrating an exemplary computing device configured for generating hardware configuration using an engineering system according an embodiment of the present invention;
- FIG 2: illustrates a block diagram of the connection establishment module according to an embodiment of the present invention;
- FIG 3: is a process flow chart illustrating an exemplary method of dynamically creating connections between hardware devices of an automation system using the engineering system according to an embodiment of the present invention;
- FIG 4: is a process flowchart illustrating an exemplary method of selecting a connection rule from a set of connection rules according to an embodiment of the present invention;
- FIG 5: illustrates a block diagram of a computing system configured for providing access to the engineering system to a plurality of client devices according another embodiment of the present invention; and
- FIGs 6A-6D: are schematic diagrams illustrating a process of dynamically creating connections between hardware devices in an automation system according to an embodiment of the present invention.

Various embodiments are described with reference to the drawings, wherein like reference numerals are used to refer the drawings, wherein like reference numerals are used to refer to like elements throughout. In the following description, for the purpose of explanation, numerous specific details are set forth in order to provide thorough understanding of one or more embodiments. It may be evident that such embodiments may be practiced without these specific details.

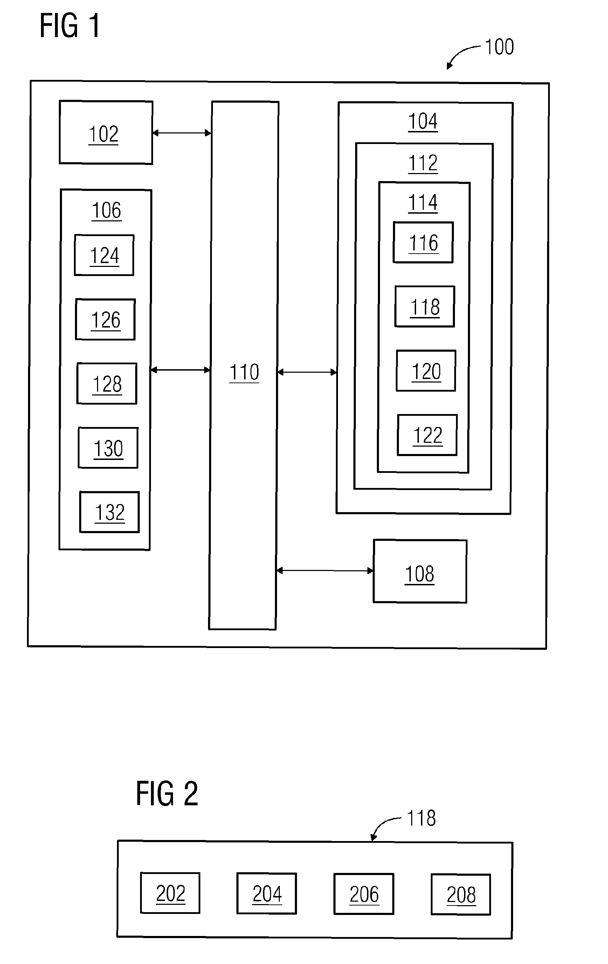

FIG 1 is a block diagram illustrating an exemplary computing device 100 configured for generating hardware configuration using an engineering system 112 according an embodiment of the present invention. The computing device 100 may be a personal computer, a laptop computer, a server computer, a tablet and the like. In FIG 1, the computing device 100 comprises a processor 102, a memory 104, a storage unit 106, input/output devices 108, and a bus 110.

The processor 102, as used herein, means any type of computational circuit, such as, but not limited to, a microprocessor, a microcontroller, a complex instruction set computing microprocessor, a reduced instruction set computing microprocessor, a very long instruction word microprocessor, an explicitly parallel instruction computing microprocessor, a graphics processor, a digital signal processor, or any other type of processing circuit. The processor 102 may also include embedded controllers, such as generic or programmable logic devices or arrays, application specific integrated circuits, single-chip computers, and the like.

The memory 104 may be volatile memory and non-volatile memory. A variety of computer-readable storage media may be stored in and accessed from the memory 104. The memory 104 may include any suitable elements for storing data and machine-readable instructions, such as read only memory, random access memory, erasable programmable read only memory, electrically erasable programmable read only memory, hard drive, removable media drive for handling compact disks, digital video disks, diskettes, magnetic tape cartridges, memory cards, and the like. As depicted, the memory 104 comprises the engineering system 112 stored in the form of machine-readable instruction on any of the above-mentioned storage media and may be executed by the processor 102. The engineering system 112 comprises a hardware configuration module 114. The hardware configuration module 114 comprises a device selection module 116, a connection establishment module 118, an editing module 120, and a ranking module 122.

For example, when executed by the processor 102, the engineering system 112, cause the processor 102, to provide a engineering graphical user interface (GUI) editor for creating hardware configurations of hardware devices in an automation system such as an industrial automation system deployed in an industrial setting. The hardware configuration module 114, cause the processor 102, to facilitate a user to create the hardware configurations using the engineering GUI editor. For example, the user may create switched hardware configuration and hybrid hardware configuration using the engineering GUI editor. The type of hardware configurations created by the user may depend upon communication protocol such as Process Field Bus (PROFIBUS) and Process Field Network (PROFINET) supported by the hardware devices in the industrial setting.

In creating the hardware configuration, the device selection module 116, cause the processor 102, to select a desired type of hardware device from an engineering catalogue 124. The engineering catalogue 124 is a device library storing GUI instances of variety of hardware devices that are deployed in the automation system. Each GUI instance in the engineering catalogue 124 is a graphical object representing a hardware device deployed in the automation system. The hardware device may be a master hardware device or a non-master hardware device. In an exemplary implementation, the device selection module 116 may enable the user to drag and drop GUI instances of desired hardware devices from the engineering catalogue 124 into the engineering GUI editor. Accordingly, the device selection module 116 displays these GUI instances of the desired hardware devices in the engineering GUI editor.

The connection establishment module 118, cause the processor 102, to detect selection of a GUI instance of a non-master hardware device in the engineering GUI editor. Accordingly, the connection establishment module 118, cause the processor 102, to determine an appropriate GUI instance among the GUI instances of the master hardware devices in the engineering GUI editor for connecting to the GUI instance of the non-master hardware device based on a set of connection rules. The set of connection rules may assist the connection establishment module 118 in determining a relevant GUI instance from the GUI instances of the master hardware devices displayed in the engineering GUI editor. In one embodiment, the connection rule may indicate that GUI instance of master hardware device which was previously connected to newly added GUI instance of non-master hardware device for highest number of times should be selected for establishing connection between the master hardware device and the non-master hardware device. In this embodiment, the connection establishment module 118, cause the processor 102, to determine number of times each of the GUI instances of the master hardware devices was previously connected to the newly added GUI instance of the non-master hardware device. Accordingly, the connection establishment module 118, cause the processor 102, to determine the GUI instance of the master hardware device which was previously connected to the GUI instance of the non-master hardware device for highest number of times.

In another embodiment, the connection rule may indicate that GUI instance of master hardware device which supports same type of port supported by non-master hardware device should be selected for establishing connection with newly added GUI instance of the non-master hardware device. In this embodiment, the connection establishment module 118, cause the processor 102, to determine GUI instance of the master hardware device among GUI instances of the master hardware devices which support same type of port as the non-master hardware device. If there as more than one GUI instance which support the same port as that of the non-master hardware device, then the connection establishment module 118, cause the processor 102, to determine the GUI instance of the master hardware device which was previously connected to the GUI instance of the non-master hardware device for highest number of times among the identified GUI instances of the master hardware devices.

In yet another embodiment, the connection rule may indicate that GUI instance of master hardware device which is in close proximity to newly added GUI instance of non-master hardware device in the engineering GUI editor should be selected for establishing connection with the newly added GUI instance of the non-master hardware device. In this embodiment, the connection establishment module 118, cause the processor 102, to determine the GUI instance of the master hardware device which is in close proximity to the GUI instance of the non-master hardware device among the GUI instances of the master hardware devices in the engineering GUI editor.

In further another embodiment, the connection rule may indicate that GUI instance of master hardware device for which number of currently established connections is less than maximum number of connections supported should be selected for establishing connection with a newly added GUI instance of non-master hardware device. In this embodiment, the connection establishment module 118, cause the processor 102, to determine the GUI instance of the master hardware device for which number of currently established connections are less than the maximum number of connections supported. If more than one GUI instance is identified, then the connection establishment module 118, cause the processor 102, to determine the GUI instance of the master hardware device which was previously connected to the GUI instance of the non-master hardware device for highest number of times among the identified GUI instances of the master hardware devices.

In accordance with the foregoing embodiments, the connection establishment module 118, cause the processor 102, to select suitable connection rule from the set of connection rules based on a rank assigned to each of the connection rules. The set of connection rules are ranked based on the usage of the connection rules in establishing connection between master hardware device and non-master hardware device. In an exemplary implementation, the connection establishment module 118, cause the processor 102, to select a connection rule which is ranked highest among the set of connection rules. Alternatively, when a user prefers one or more connection rules, the connection establishment module 118, cause the processor 102, to select the connection rule based on user preference. In this case, rank associated with the connection rules is not considered. In some embodiments, the connection establishment module 118 enables a user to set a default connection rule among the set of connection rules. In these embodiments, the connection establishment module 118, cause the processor 102, to select the default connection rule. It can be noted that the selected connection rule can be one of the connection rules mentioned above. It can also be noted that the connection establishment module 118 may apply any combination of connection rules among the set of connection rules to determine master hardware device for establishing connection with non-master hardware device.

The connection establishment module 118, cause the processor 102, to dynamically create a connection object connecting the determined GUI instance of the master hardware device and the GUI instance of the non-master hardware device. The connection object is a graphical representation of a physical connection between the master hardware device and the non-master hardware device. It can also be noted that the connection establishment module 118 may directly create a connection object between master hardware device and non-master hardware device when there is a single GUI instance of the master hardware device in the engineering GUI editor. That is, the connection establishment module 118 need not apply connection rules when single GUI instance of master hardware device is present in the engineering GUI editor.

It is understood that, the connection establishment module 118 may enable the user to set a specific connection rule as a default connection rule. In such case, the connection establishment module 118 may determine suitable GUI instance of master hardware device based on the default connection rule. It is understood that, the connection establishment module 118 may not consider the ranking of connection rules for selecting a connection rule.

The editing module 120, cause the processor 102, to enable the user to edit the connection object connecting the GUI instance of the master hardware device and the GUI instance of the non-master hardware device. For example, the editing module 120 may enable the user to connect one end of the connection object to the GUI instance of another master hardware device instead of the determined GUI instance of the master hardware device. Based on this, the connection establishment module 118 may learn user preference in establishing connections between GUI instances and automatically create and add a new connection rule to the set of connection rules. If the connection rule, based on which the connection is made by the user, already exists in the set of connection rules, then rank associated with the connection rule is updated in the rank database 130. It is appreciated that, the editing module 120 may provide necessary editing options in the engineering GUI editor to edit the connection object.

The ranking module 122, cause the processor 102, to update rank assigned to the connection rule which is used to determine suitable GUI instance of master hardware device for establishing connection with newly added GUI instance of non-master hardware device. In an exemplary implementation, the ranking module 122, cause the processor 102, to update the rank of the connection rule if the user accepts the dynamically created connection object. For example, the ranking module 122 increments the rank assigned to the connection rule by a value '1' if the user accepts the dynamically created connection object. It can be noted that, in case more than one connection rule is applied to determine GUI instance of the master hardware device, the ranking module 122 may update rank of these connection rules.

The hardware configuration module 114, may cause the processor 102, to set parameter values for each of the hardware devices in the hardware configuration being created and output the hardware configuration in a desired format for downloading on one of the hardware devices in the automation system.

The storage unit 106 may be a non-transitory storage medium configured for storing databases. For example, the storage unit 106 contains the engineering catalogue 124 which displays GUI instances of hardware devices in the automation system. The storage unit 106 contains a connection rules database 126 which stores the set of connection rules for identifying appropriate GUI instance of master hardware device. The storage unit 106 also contains a connection history database 128 which stores history of connections established between master hardware devices and non-master hardware devices. The connection history enables to determine number of times connections were previously established between the master hardware devices and the non-master hardware devices.

The storage unit 106 contains a rank database 130 which stores rank associated with each of the set of connection rules. In one exemplary implementation, the connection establishment module 118 may refer to the rank database to determine the rank associated with the connection rules during selection of a connection rule having highest rank. In another exemplary implementation, the ranking module 122 may update the rank associated with the connection rule(s) in the rank database 130 when dynamically created connection, created based on the connection rule(s), is accepted by the user. It can be noted that the engineering catalogue 124, the connection rules 126, the connection history database 128 and the rank database 130 may reside at a remote server and may be remotely accessed by the computing device 100 via a network connection. Additionally, the storage unit 106 contains a hardware configuration database 132 for storing hardware configurations created using the engineering system 112.

The input/output devices 108 may include keyboard, keypad, monitor, touch sensitive display screen, mouse and the like. The input device/output devices 108 enable the user to interface with the computing device 100 during creation of hardware configuration. For example, the input device may enable drag and drop GUI instances of different hardware devices from the engineering catalogue into the engineering GUI editor. The output device may display the engineering GUI editor of the engineering system 112. The bus 110 may acts as an interface between the processor 102, the memory 104, the storage unit 106 and the input/output module 108.

FIG 2 illustrates a block diagram of the connection establishment module 118 according to an embodiment of the present invention. The connection establishment module 118 comprises a connection rule selection module 202, a GUI instance determination module 204, a connection object generation module 206, and a connection creation module 208.

The connection rule selection module 202, cause the processor 102, to determine rank associated with each of the connection rules using the rank database 130. In an exemplary implementation, the connection rule selection module 202, cause the processor 102, to determine rank associated with each of the connection rules upon adding GUI instance of non-master hardware device in the engineering GUI editor.

The connection rule selection module 202, cause the processor 102, to select a connection rule having a highest rank among the set of connection rules. In case, more than one connection rule is having the highest rank, then the connection rule selection module 202, cause the processor 102, to select recently used connection rule from the connection rules which are having the highest rank.

The GUI instance determination module 204, cause the processor 102, to determine a GUI instance from GUI instances of master hardware devices in the engineering GUI editor by applying the selected connection rule. The connection object generation module 206, cause the processor 102, to dynamically generate an appropriate connection object in the engineering GUI editor. The connection creation module 208, cause the processor 102, to determine an unused port in the GUI instance of the master hardware device. It can be noted that, in case GUI instance of a network switch is connected to the GUI instance of the master hardware device, unused port in the GUI instance of the network switch is identified. Furthermore, the unused port may be identified based on protocol supported by the unused port. Then, the connection creation module 208, cause the processor 102, to automatically connect one end of the connection object to the unused port in the GUI instance of the master hardware device and other end of the connection object to a port in the GUI instance of the non-master hardware device.

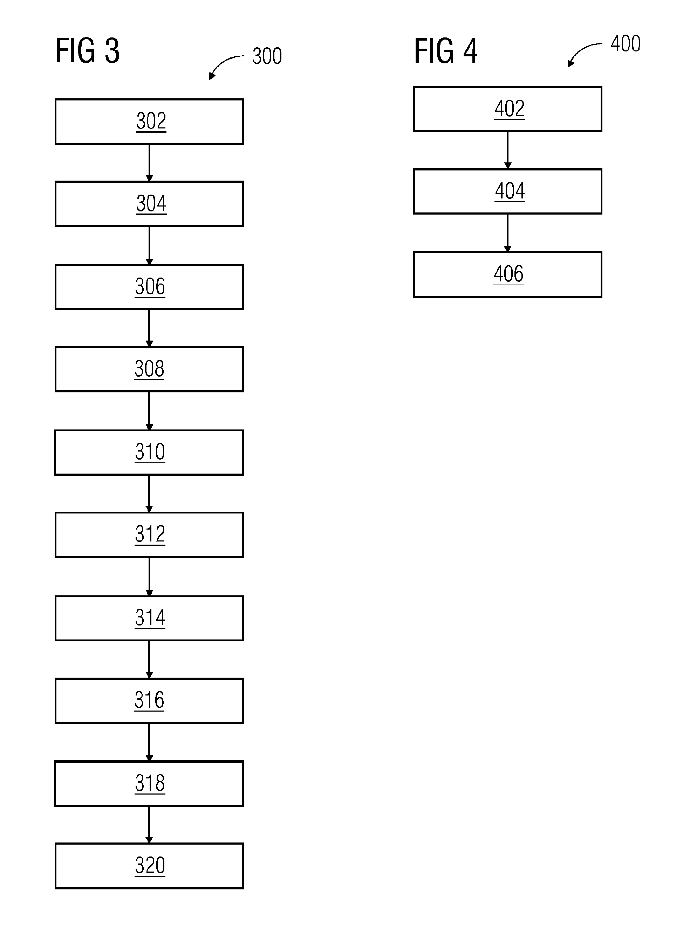

FIG 3 is a process flow chart illustrating an exemplary method of dynamically creating connections between hardware devices in an automation system using the engineering system 112 according to an embodiment of the present invention. Consider that a user of the engineering system 112 wishes to create hardware configuration for the automation system. Also, consider that the user has added GUI instances of master hardware devices in the engineering GUI editor from the engineering catalogue 124. Now, the user selects a non-master hardware device from the engineering catalogue 124. At step 302, selection of the non-master hardware device from the engineering catalogue 124 is detected. For example, the selection of the non-master hardware device is detected based on activity performed by the user such as drag and drop or a click on add button in the engineering system 112.

At step 304, a GUI instance of the non-master hardware device is generated in the engineering GUI editor. Thus, the engineering system 112 displays the GUI instance of the non-master hardware device in the engineering GUI editor. At step 306, a connection rule which is assigned a highest rank among a set of connection rules is automatically identified using the rank database 130 upon generating the GUI instance of the non-master hardware device. Each of the connection rules is assigned a rank based on usage of said each connection rule. The rank assigned to a connection rule is incremented if the connection rule is used to create a connection. The rank information associated with the set of connection rules is stored in the rank database 130. Based on the rank information, the connection rule with the highest rank is identified for creating a connection.

At step 308, the identified connection rule is applied to the GUI instances of the master hardware devices in the engineering GUI editor. For example, the identified connection rule may specify that GUI instance of master hardware device which was previously connected to the GUI instance of the non-master hardware device. The term 'previously connected' refers to connections created between GUI instance of a specific master hardware device and newly added GUI instance of non-master hardware device in the current hardware configuration and previously created hardware configurations. The identified connection rule is applied to determine which of the GUI instances of the master hardware devices was previously connected to the GUI instance of the non-master hardware device for highest number of times.

At step 310, a GUI instance from the GUI instances of the master hardware device suitable for connecting to the GUI instance of the non-master hardware device is determined based on the identified connection rule. For example, the determined GUI instance may be a GUI instance which was previously connected to the GUI instance of the non-master hardware device for highest number of times among the GUI instances of the master hardware devices. At step 312, unused port in the GUI instance of the non-master hardware device is determined. At step 314, unused port in the GUI instance of the master hardware device is determined. The unused port is a port which is supported by the non-master hardware device. For example, if the non-master hardware device supports PROFIBUS communication protocol, then the unused port which supports PROFIBUS communication protocol is determined.

At step 316, a connection object is dynamically generated in the engineering GUI editor such that one end of the connection object is connected to the unused port in the GUI instance of the non-master hardware device and the other end of the connection object is connected to the unused port in the GUI instance of the master hardware device. The connection object represents a physical connection between the master hardware device and the non-master hardware device in the automation system.

At step 318, rank of the identified connection rule is updated in the rank database 130. For example, the rank of the identified connection rule is incremented by '1'. In an exemplary implementation, the rank of the identified connection rule is updated if the user has accepted the dynamically generated connection object. That is, if the dynamically generated connection object is rejected by the user, the rank of the identified connection rules is not incremented. However, the rank of the connection rule used by the user to manually create the connection between the GUI instances may be incremented. If no matching connection rule exists in the set of connection rules, then a new connection rule is automatically created and added to the set of connection rules. Furthermore, rank for the newly added connection rule is incremented. Once the connection object is accepted by the user, then at step 320, the connection history database 128 is updated. In this manner, connections are dynamically created between different hardware devices during creation of a hardware configuration. This eliminates the need for manually creating connections between the different hardware devices in the hardware configuration, thereby saving time and effort. Once the connections are created between all the hardware devices, parameter values are set for each of the hardware devices and the hardware configuration outputted in a desired format which is then downloaded to a hardware device such as a main programmable logic controller (PLC) in the automation system.

FIG 4 is a process flowchart illustrating an exemplary method of selecting a connection rule from a set of connection rules according to an embodiment of the present invention. When a GUI instance of a non-master hardware device is newly added from the engineering catalogue into an engineering GUI editor, a rank list is obtained from the ranking database 130, at step 402. The rank list contains rank associated with each of the connection rules. At step 404, the rank list is sorted in the ascending order of rank. At step 406, the connection rule having the highest rank is selected for creating connection between the non-master hardware device and a master hardware device.

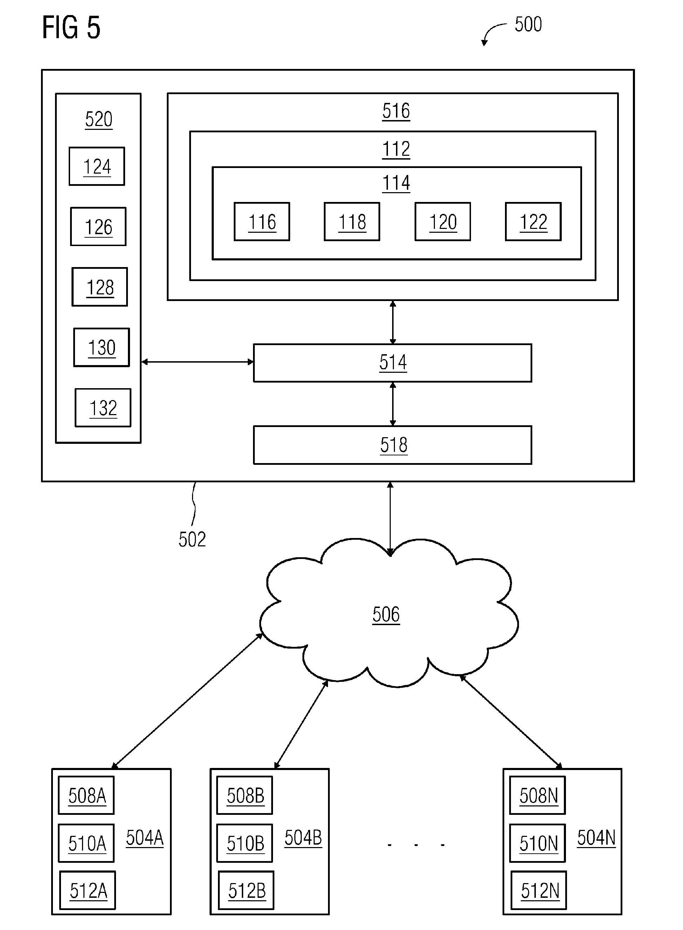

FIG 5 illustrates a block diagram of a computing system 500 configured for providing access to the engineering system 112 to a plurality of client devices 504A-N according another embodiment of the present invention. The computing system 500 comprises a server 502, the client devices 504A, and a network 506.

Each of the client devices 504A-N is connected to the server 502 via the network 506. The server 502 comprises a processor 514, a memory 516, a network interface 518, and a storage unit 520. The processor 514 is configured for processing requests from the client devices 504A-N, executing machine-readable instructions stored in the memory 516, and providing response to the client devices 504A-N. The memory 516 comprises the engineering system 112 stored in the form of machine-readable instructions and executable by the processor 514. The engineering system 112 comprises the hardware configuration module 114. The hardware configuration module 114 comprises the device selection module 116, the connection establishment module 118, the editing module 120, and the ranking module 122. The network interface 518 enables the server 502 to interact with each of the client devices 504A-N via the network 506. The storage unit 520 comprises the engineering catalogue 124, the connection rules database 126, the connection history database 128, the rank database 130, and the hardware configuration database 132.

The client devices 504A-N may include a tablet computer, a desktop, a laptop, a smart phone and the like devices. The client devices 504A-N comprises processors 508A-N, input/output devices 510A-N, and communication modules 512A-N respectively. The input/output devices 510A-N may be keyboard, mouse, display unit, touch screen display interface. The input/output devices 510A-N enables the users to input commands for interacting with the server 502 or output response received from the server 502. The communication modules 512A-N enables the respective client devices 504A-N to communicate with the server 502 via the network 506. The communication modules 512A-N may be Wi-Fi modules, Ethernet Module, GSM module, and so on.

When users of the client devices 504A-N wishes to create desired hardware configurations, the users of the client devices 504A-N accesses the engineering system 112 in the server 502 via the network 506. For example, the processors 508A-N in the client devices 504A-N sends a request to access the engineering system 112 to the server 502 via the network 506 using the respective communication modules 512A-N. Accordingly, the processor 514 of the server 502 provides access to the engineering system 112 to each of the client devices 504A-N. Consequently, an engineering GUI editor is displayed on each of the client devices 504A-N. Thus, the users of the client devices 504A-A can create a desired hardware configuration using the engineering GUI editor displayed therein.

According to the present invention, the server 502 dynamically creates connections between different graphical user interface (GUI) instances in the engineering GUI editor displayed therein. This is achieved in the similar manner described in the description of FIG 1. For example, the device selection module 116 enables the users to access the engineering catalogue 124 on the respective client devices 504A-N and add a GUI instance of hardware device from the engineering catalogue 124 in the engineering GUI editor. The users may add a GUI instance of a non-master hardware device or a master hardware device using the input/output device 508A. When the users add a GUI instance of a non-master hardware device, the connection establishment module 118 identifies a connection rule from a set of connection rules in the connection rule database 126 based on a rank assigned to the connection rule. In an exemplary implementation, the set of connection rules may be specific to particular user. Hence, different set of connection rules are stored in the connection rule database 128 for different users or client devices 504A-N. In another exemplary implementation, the set of connection rules may be common for all the users or client devices 504A-N. Further, when the connection rule requires use of connection history for determining suitable GUI instances, the connection history may be maintained and used in common for all the users or client devices 504A-N. Alternatively, the connection history may be maintained and used separately for each of the users or client devices 504A-N.

Then, the connection establishment module 118 determines a suitable GUI instance of a master hardware device based on the identified connection rule. Furthermore, the connection establishment module 118 dynamically creates a connection object which connects the determined GUI instance of the master hardware device and the GUI instance of the non-master hardware device in the engineering GUI editor displayed on the respective client devices 504A-N.

The editing module 120 enables the users to edit the connection object as desired. The ranking module 122 updates rank of the connection rules in the rank database 130 if the users have accepted the dynamically created connection objects in respective hardware configurations. In this manner, the users of the client devices 504A-N can simultaneously create desired hardware configurations by accessing the engineering system 112 in the server 502. The hardware configurations thus created are stored in the hardware configuration database 132.

In some embodiments, the engineering system 112 may reside at each of the client devices 504A-N and the server 502 maintains the connection rule database 126 comprising the set of connection rules which are common across the client devices 504A-N. In these embodiments, the server 502 provides the appropriate connection rule to the respective client device 504A-N each time GUI instance of the non-master hardware device is created in the engineering GUI editor of the respective client devices 504A-N. Furthermore, the engineering system 112 in the respective client devices 504A-N applies the connection rule received from the server 502 to determine suitable GUI instance of the master hardware device and automatically creates a connection object. Upon creation of the connection object, the server 502 increments rank of the applied connection rule in the rank database 130.

In the accordance with the above embodiments, the computing system 500 of FIG 5 may be implemented in cloud computing architecture. This is would enable the client devices 504A-N to access the engineering system 112 in fast and efficient manner.

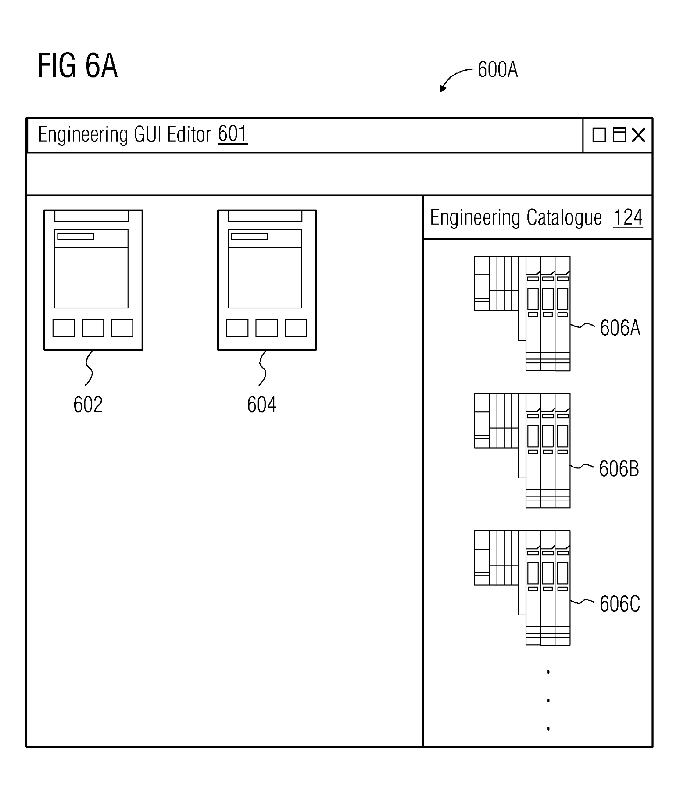

FIGs 6A-6D are schematic diagrams illustrating a process of dynamically creating connections between hardware devices in an automation system according to an embodiment of the present invention. FIG 6A illustrates a screenshot view 600A of the engineering system 112. The engineering system 112 comprises an engineering GUI editor 601 and an engineering catalogue 124. The engineering catalogue 124 displays graphical object 606A-N representing various hardware devices. The engineering GUI editor 601 is capable of displaying GUI instances of hardware devices which form a desired hardware configuration.

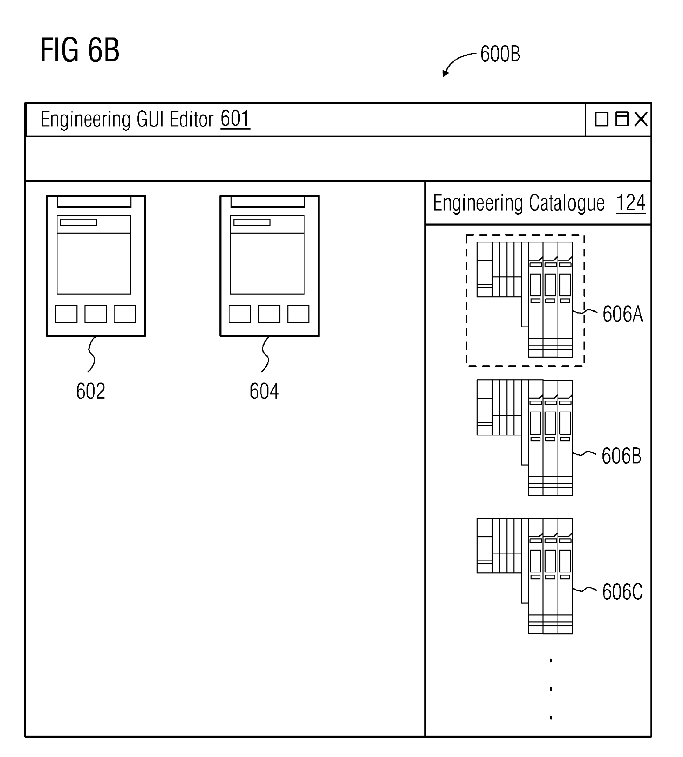

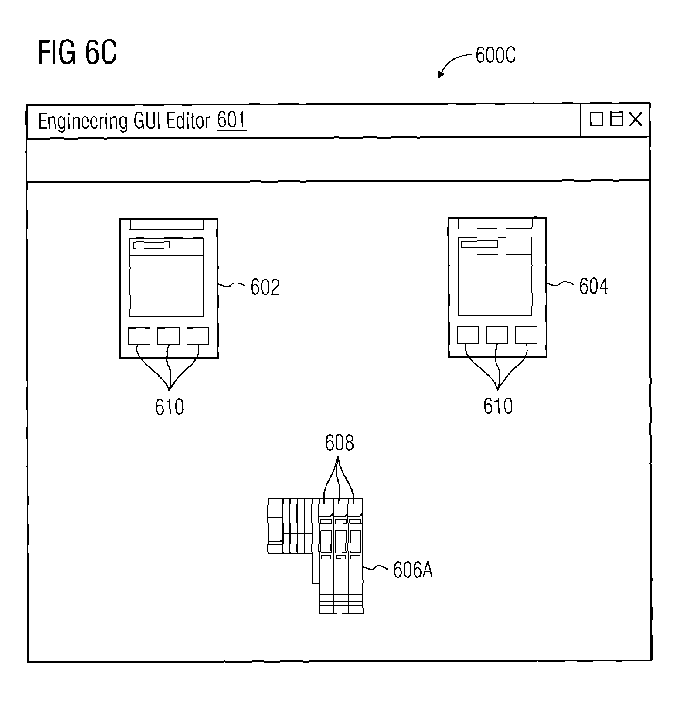

As depicted in the screenshot view 600A of FIG 6A, consider that the user has added GUI instances 602 and 604 of two master hardware devices. As shown in the screenshot view 600B of FIG 6B, the user wishes to add a GUI instance of a non-master hardware device in the engineering GUI editor 601 and hence the user selects a GUI instance 606A of the non-master hardware device in the engineering catalogue 124. Then, the user drags and drops the GUI instance 606A of the non-master hardware device in the engineering GUI editor 601 as depicted in the screenshot view 600C of FIG 6C. Upon adding the GUI instance 606A to the engineering GUI editor 601, the connection establishment module 118 identifies a connection rule with a highest rank among a set of connection rules from the connection rule database 126.

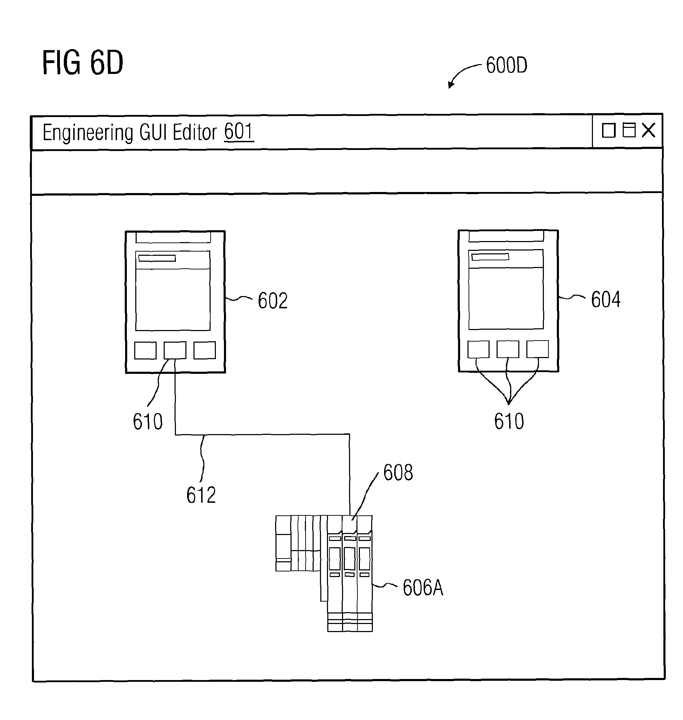

Further, the connection establishment module 118 determines one of the GUI instances 602 and 604 as suitable for creating connection with the GUI instance 606A using the identified connection rule. Consider that, the connection establishment module 118 identifies the GUI instance 602 of the master hardware device as suitable for establishing connection with the GUI instance 606A. Thereafter, the connection establishment module 118 determines an unused port 610 of the GUI instance 602 and an unused port 608 of the GUI instance 606A. Furthermore, the connection establishment module 118 dynamically creates a connection object 612 in the engineering GUI editor 601 and connects one end of the connection object to the unused port 608 of the GUI instance 606A and other end of the connection object to the unused port 610 of the GUI instance 602 as depicted in the screenshot view 600D of FIG 6D. In this manner, connections between master hardware device and non-master hardware device are created during creation of desired hardware configuration. This saves a lot of time and effort required in manually creating connections between the hardware devices.

The present invention can take a form of a computer program product comprising program modules accessible from computer-usable or computer-readable medium storing program code for use by or in connection with one or more computers, processors, or instruction execution system. For the purpose of this description, a computer-usable or computer-readable medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processors and program code for implementing each aspect of the technology can be centralized or distributed (or a combination thereof) as known to those skilled in the art.

While the present invention has been described in detail with reference to certain embodiments, it should be appreciated that the present invention is not limited to those embodiments. In view of the present disclosure, many modifications and variations would be present themselves, to those skilled in the art without departing from the scope of the various embodiments of the present invention, as described herein. The scope of the present invention is, therefore, indicated by the following claims rather than by the foregoing description. All changes, modifications, and variations coming within the meaning and range of equivalency of the claims are to be considered within their scope.

## Claims

1. A method of dynamically establishing connections between hardware devices in an automation system, comprising:
creating, using a processor (102, 514), a graphical user interface (GUI) instance (606A) of a first type of hardware device of the automation system in a hardware configuration being created;
determining an GUI instance (602) of a second type of hardware device of the automation system from different GUI instances (602, 604) of the second type of hardware device in the hardware configuration based on a set of connection rules; and
dynamically generating a connection object (612) in the hardware configuration which connects the GUI instance (606A) of the first type of hardware device and the GUI instance (602) of the second type of hardware device, wherein the connection object (612) represents a physical connection between the hardware device of first type and the hardware device of second type in the automation system.

2. The method according to claim 1, further comprising:
identifying a connection rule from the set of connection rules using rank information in a rank database (130).

3. The method according to claim 1, further comprising:
identifying a connection rule from the set of connection rules based on user preference.

4. The method according to any of the preceding claims 1 to 3, wherein determining the GUI instance (602) of the second type of hardware device based on the set of connection rules comprises:
determining number of times each of the different GUI instances (602, 604) of the second type of hardware device was previously connected to the GUI instance (606A) of the first type of hardware device based on connection history; and
determining the GUI instance (602) from the different GUI instances (602, 604) of the second type of hardware device which was previously connected to the GUI instance (606A) of the first type of hardware device for highest number of times among the different GUI instances.

5. The method according to any of the preceding claims 1 to 3, wherein determining the GUI instance (602) of the second type of hardware device based on the set of connection rules comprises:
determining type of port supported by the first type of hardware device; and
determining the GUI instance (602) from the different GUI instances (602, 604) of the second type of hardware device which supports the type of port supported by the first type of hardware device.

6. The method according to any of the preceding claims 1 to 3, wherein determining the GUI instance (602) of the second type of hardware device based on the set of connection rules comprises:
determining the GUI instance (602) from the different GUI instances (602, 604) of the second type of hardware device which is in close proximity to the GUI instance (606A) of the first type of hardware device in the hardware configuration.

7. The method according to any of the preceding claims 1 to 3, wherein determining the GUI instance (602) of the second type of hardware device based in the set of connection rules comprises:
determining number of GUI instances of the first type of hardware device currently connected to each of the different GUI instances (602, 604) of the second type of hardware device;
determining one or more GUI instances (602) from the different GUI instances (602, 604) of the second type of hardware device which currently supports maximum number of GUI instances of the first type of hardware device than the number of connected GUI instances; and
determining the GUI instance (602) from the one or more GUI instances (602, 604) of the second type of hardware device which was previously connected to the GUI instance (606A) of the first type of hardware device for highest number of times among the one or more GUI instances (602).

8. The method according to any of the preceding claims 1 to 7, wherein dynamically generating the connection object (612) in the hardware configuration comprises:
determining an unused port (610) in the GUI instance (606A) of the first type of hardware device;
determining an unused port (608) in the determined GUI instance (602) of the second type of hardware device; and
generating the connection object (612) in the hardware configuration, wherein the first end of the connection object (612) is connected to the unused port (610) in the GUI instance (606A) of the first type of hardware device and the second end of the connection object (612) is connected to the unused port (608) of the GUI instance (602) of the second type of hardware device.

9. The method according to claim 1 or 8, further comprising:
updating connection history stored in a connection history database (128) based on the generated connection object (612).

10. The method according to claims 1 or 2, further comprising:
updating the rank information associated with the identified connection rule.

11. The method according to claim 1 or 8, further comprising:
editing the connection object (612) connected between the GUI instance (606A) of the first type of hardware device and the GUI instance (602) of the second type of hardware device in the hardware configuration.

12. The method according to claim 1 or 11, further comprising:
creating a new connection rule based on used action.

13. The method according to any of the preceding claims 1 to 12, wherein the first type of hardware device is a non-master hardware device.

14. The method according to any of the preceding claims 1 to 12, wherein the second type of hardware device is a master hardware device.

15. The method according to claim 1, further comprising:
setting parameter values for each of the first type of hardware device and the second type of hardware device; and outputting the hardware configuration for the automation system.

16. An apparatus (100, 502) comprising:
a processor (102, 514); and
a memory (104, 516) coupled to the processor (102, 514),
wherein the memory (104, 516) comprises an engineering system (112) capable of:
creating a graphical user interface (GUI) instance (606A) of a first type of hardware device of an automation system in a hardware configuration being created;
determining an GUI instance (602) of a second type of hardware device of an automation system from different GUI instances (602, 604) of the second type of hardware device in the hardware configuration based on a set of connection rules; and
dynamically generating a connection object (612) in the hardware configuration which connects the GUI instance (606A) of the first type of hardware device and the GUI instance (602) of the second type of hardware device, wherein the connection object (612) represents a physical connection between the hardware device of first type and the hardware device of second type in the automation system.

17. The apparatus (100, 502) according to claim 16, wherein the engineering system (112) is capable of:
identifying a connection rule from the set of connection rules based on rank information in a rank database (130).

18. The apparatus (100, 502) according to claim 16, wherein the engineering system (112) is capable of:
identifying a connection rule from the set of connection rules based on user preference.

19. The apparatus (100, 502) according to claim 16, wherein the engineering system (112) is capable of:
updating connection history stored in a connection history database (128) based on the connection object (612).

20. The apparatus (100, 502) according to claim 16 or 17, wherein the engineering system (112) is capable of:
updating the rank information associated with the identified connection rule.

21. The apparatus (100, 502) according to claim 16, wherein the engineering system (112) is capable of:
editing the connection object (612) connected between the GUI instance (606A) of the first type of hardware device and the GUI instance (602) of the second type of hardware device in the hardware configuration.

22. The apparatus (100, 502) according to claim 21, wherein the engineering system is capable of:
creating a new connection rule based on used action.

23. A system (500) comprising:
a server (502); and
a plurality of client devices (504A-N)coupled to the server (502), **characterized in that** the server (502) comprises an engineering system (112) capable of:
creating a graphical user interface (GUI) instance (606A) of a first type of hardware device of an automation system in an engineering GUI editor (601) displayed on the respective client devices (504A-N);
determining an GUI instance (602) of a second type of hardware device of an automation system from different GUI instances (602, 604) of the second type of hardware device in the engineering GUI editor (601) based on a set of connection rules; and
dynamically generating a connection object (612) in the engineering GUI editor (601) which connects the GUI instance (606A) of the first type of hardware device and the GUI instance (602) of the second type of hardware device, wherein the connection object (612) represent a physical connection between the hardware device of first type and the hardware device of second type in the automation system.
